# EUROPÄISCHE PATENTSCHRIFT

(11) **EP 1 211 113 B1**
(45) Veröffentlichungstag und Bekanntmachung des Hinweises auf die Patenterteilung: **06.09.2006**
(21) Anmeldenummer: 01125520.5
(22) Anmeldetag: 25.10.2001
(51) Int. Cl.: B60J 7/057

(54) **Antriebsvorrichtung für Kraftfahrzeugschiebedächer**
Driving device for vehicle sliding roof
Dispositif d'entraînement pour toit coulissant de véhicule

(30) Priorität: 30.11.2000 DE 10059456
(43) Veröffentlichungstag der Anmeldung: 05.06.2002
(73) Patentinhaber: ArvinMeritor GmbH, 63128 Dietzenbach (DE)
(72) Erfinder: Friedrich, Norbert, Dipl.-Ing., 61273 Wehrheim (DE); Hattass, Rainer, Dipl.-Ing., 63584 Gründau (DE)
(74) Vertreter: Oppermann, Ewald

(56) Entgegenhaltungen:
- DE-C- 19 828 464
- US-A- 4 919 005
- US-A- 5 746 090

## Beschreibung

Die Erfindung bezieht sich auf eine Antriebsvorrichtung für Kraftfahrzeugschiebedächer entsprechend dem Oberbegriff des Patentanspruchs 1.

Die Bezeichnung "Kraftfahrzeugschiebedach" bzw. "Schiebedach" soll für die Zwecke der vorliegenden Erfindung alle Konstruktionen einschließen, bei denen mindestens ein Deckel einer Dachöffnung eines Kraftfahrzeugs verstellbar zugeordnet und dabei mittels der Antriebsvorrichtung bewegbar ist. Dazu gehören Konstruktionen, bei denen der Deckel nach Absenken seiner Hinterkante zur Freigabe der Dachöffnung unter die hintere feste Dachfläche verschiebbar ist, aber auch sogenannte Schiebehebedächer, bei denen der Deckel außerdem ausgehend von seiner die Dachöffnung schließenden Stellung um eine in der Nähe seiner Vorderkante vorgesehene Schwenkachse zur Ausstellung über die feste Dachfläche verschwenkt werden kann. Schließlich soll diese Definition auch solche Konstruktionen umfassen, bei denen der Deckel nach Anheben seiner Hinterkante mehr oder weniger nach hinten über die hintere feste Dachfläche verlagerbar ist (sogenannte Oberfirstschiebedächer, Spoilerdächer). Auch solche Dachkonstruktionen sollen eingeschlossen sein, bei denen der mindestens eine Deckel nicht aus Blech oder Glas gebildet ist, sondern als Faltdach aus flexiblem Material.

Allen bekannten Antriebsvorrichtungen der eingangs genannten Art (z.B. DE 38 03 816 A1, DE 38 09 949 A1, DE 195 31 514 C1) ist gemeinsam, daß das über ein Handkurbelgetriebe oder einen Elektrogetriebemotor angetriebene Zahnritzel mit seiner Verzahnung unmittelbar mit den Arbeitswicklungen der Antriebskabel nach Art eines Zahnstangenantriebs eingreift. Wegen des kreisförmigen Querschnittsumfangs der Draht-Arbeitswicklung und den unvermeidbaren Maßtoleranzen an den Antriebskabeln, dem Zahnritzel und den Führungselementen für die Antriebskabel läßt sich bei diesen bekannten Antriebsvorrichtungen eine ideale Zahnform am Zahnritzel, die einem normalen optimierten Zahngetriebe entsprechen würde, nicht realisieren. Außerdem läßt sich nicht sicherstellen, daß immer mindestens ein Zahn des Zahnritzels mit jedem Antriebskabel eingreift, woraus ein ruckartiger, ungleichförmiger Vorschub der Antriebskabel resultiert. Dabei ändert sich der Wirkkreis des Zahnritzels durch Bewegungsspiel des Zahneingriffs, auch aufgrund von Ausweichbewegungen der Antriebskabel, wodurch auf die Rahmenstruktur des Schiebedachs und damit auf das Fahrzeugdach selbst übertragbare Schwingungsanregungen entstehen können. Im Ergebnis kann es zu einer als störend empfundenen Geräuschbildung bei Stell- und Antriebsbewegungen des Schiebedachs kommen, insbesondere dann, wenn das Zahnritzel durch einen Elektromotor angetrieben ist.

Der Erfindung liegt die Aufgabe zugrunde, eine Antriebsvorrichtung der eingangs genannten Art bereitzustellen, mit welcher gleichförmige und geräuscharme Verschiebebewegungen der beiden Antriebskabel ohne Schwingungsanregungen ermöglicht werden.

Diese Aufgabe wird erfindungsgemäß durch die Merkmale des Patentanspruchs 1 gelöst. Vorteilhafte Weiterbildungen der Erfindung gehen aus den Unteransprüchen hervor und sind nachfolgend ebenfalls näher beschrieben.

Durch die erfindungsgemäße Anordnung eines Zahnriemens werden Zahnritzel und Antriebskabel voneinander entkoppelt, wobei immer eine Mehrzahl von Zähnen des Zahnritzels mit einer Mehrzahl von Zähnen der Innenverzahnung des Zahnriemens und immer eine Mehrzahl von Zähnen der Außenverzahnung des Zahnriemens mit einer Mehrzahl von aufeinanderfolgenden Abschnitten der Draht-Arbeitswicklungen der beiden Antriebskabel miteinander kämmend in Eingriff stehen. Auf diese Weise wird ein ruckfreier, gleichförmiger und praktisch geräuschloser Verschiebeantrieb der beiden Antriebskabel erzielt.

Vorteilhaft sind hierbei entsprechend Anspruch 2 die Innenverzahnung des Zahnriemens und das Zahnritzel geradverzahnt, während die Außenverzahnung des Zahnriemens entsprechend der gewindeartigen Schraubenliniensteigung der Draht-Arbeitswicklung der Antriebskabel schrägverzahnt ist. Aufgrund der Geradverzahnung von Zahnritzel und Innenverzahnung des Zahnriemens läßt sich dieser Zahneingriff optimieren. Die Außenverzahnung des Zahnriemens läßt sich der gewindeartigen Arbeitswicklung gut anpassen und sorgt für einen spielfreien Eingriff, zumal hierbei stets entlang geradliniger Streckenabschnitte eine Mehrzahl von Zähnen der Außenverzahnung mit den Arbeitswicklungen der Antriebskabel eingreifen.

Für die Umlenkung des endlosen Zahnriemens im Anschluß an die dem partiell vom Zahnriemen umschlungenen Zahnritzel folgenden geradlinigen und zueinander parallelen Streckenabschnitte, an denen die Außenverzahnung des Zahnriemens mit den Arbeitswicklungen der Antriebskabel eingreift, stehen im Verfolg des Erfindungsgedankens mehrere Ausführungsformen zur Verfügung.

Gemäß Anspruch 3 ist der Zahnriemen an einer drehbar gelagerten Rolle umgelenkt, wodurch nur geringe Reibungsverluste entstehen. Die Rolle kann entsprechend Anspruch 4 eine dem Zahnritzel entsprechende Verzahnung besitzen, d.h. als Umlenkrolle kann auch ein weiteres mit dem Antriebszahnritzel übereinstimmendes Zahnritzel verwendet werden, das allerdings nicht selbst angetrieben ist, sondern nur vom angetriebenen Zahnriemen drehend mitgenommen wird. Die Fertigung eines zusätzlichen Teils, nämlich einer unverzahnten Umlenkrolle, entfällt bei dieser Ausführungsform.

Anstelle einer verzahnten oder unverzahnten Umlenkrolle kann entsprechend Anspruch 5 aber auch eine einfache gerundete Gleitfläche zum Einsatz gelangen, über die der Zahnriemen geführt wird, wenn diese Gleitfläche hinsichtlich eines niedrigen Reibungskoeffizienten auf den Werkstoff des Zahnriemens entsprechend abgestimmt ist.

Vorzugsweise ist die Anordnung wie im Anspruch 6 angegeben so getroffen, daß der Zahnriemen im Bereich der für den Eingriff seiner Außenverzahnung mit den Arbeitswicklungen der Antriebskabel vorgesehenen Streckenabschnitte an Stützflächen gleitend geführt ist. Durch diese Maßnahme wird der Zahneingriff zwischen der Außenverzahnung des Zahnriemens und den Arbeitswicklungen der Antriebskabel unter allen Betriebsbedingungen sichergestellt.

Zur Vereinfachung der konstruktiven Ausbildung der Antriebsvorrichtung können gemäß Anspruch 7 die drehbar gelagerte Rolle bzw. die Gleitfläche und die Stützflächen für den Zahnriemen an einem zwischen den beiden Antriebskabeln befestigten Stütz- und Führungselement angeordnet sein. Bei Elektromotorantrieb kann dieses Stütz- und Führungselement Bestandteil der Motor/Getriebe-Einheit sein, wie im Anspruch 8 angegeben ist.

In einer vorteilhaften Weiterbildung der erfindungsgemäßen Antriebsvorrichtung ist entsprechend Anspruch 9 vorgesehen, daß die Spannung des Zahnriemens mittels einer Spannvorrichtung einstellbar ist. Alternativ kann die Anordnung aber auch entsprechend Anspruch 10 so getroffen sein, daß die Spannung des Zahnriemens durch eine federbelastete Spannvorrichtung erzeugt ist. Hierbei sind keine Einstellarbeiten erforderlich. Darüber hinaus ist bei der Serien- und Massenfertigung gewährleistet, daß bei Verwendung gleicher Federn von Antriebsvorrichtung zu Antriebsvorrichtung den Zahnriemen die gleiche Spannung erteilt wird.

Bei beiden alternativen Anordnungen kann die Spannvorrichtung wie im Anspruch 11 angegeben mit der drehbar gelagerten Rolle bzw. der gerundeten Gleitfläche wirkverbunden sein, d.h. bei Einstellung der Riemenspannung bzw. durch Federkraft unmittelbar auf die Rolle bzw. die Gleitfläche verschiebend einwirken.

In der im Anspruch 12 angegebenen Ausführungsform der Spannvorrichtung besitzt diese einen parallel zu den Antriebskabeln an dem Stütz- und Führungselement verschiebbar geführten Spannschieber, an welchen die Rolle gelagert bzw. die gerundete Gleitfläche befestigt ist. Bei einstellbarer Ausbildung der Spannvorrichtung kann entsprechend Anspruch 13 ein drehund feststellbar am Stütz- und Führungselement angebrachter Stellexzenternocken vorgesehen sein, der auf der der Rolle bzw. der Gleitfläche abgelegenen Seite des Spannschiebers diesem anliegt. Wenn die Spannung des Zahnriemens durch Federkraft erfolgen soll, kann - wie im Anspruch 14 angegeben - zwischen dem Stütz- und Führungselement und dem Spannschieber eine Druckfeder mit Vorspannung angeordnet sein.

Ausführungsbeispiele der Erfindung werden nachfolgend anhand der schematisch ausgeführten Zeichnungen näher erläutert. Darin zeigt:
- Fig. 1: die Draufsicht auf einen Schiebedachrahmen mit Deckel und Antriebsvorrichtung,
- Fig. 2: eine vergrößerte Draufsicht auf die Antriebsvorrichtung entsprechend dem Ausschnittskreis II in Fig. 1,
- Fig. 3: eine gegenüber Fig. 2 vergrößerte gebrochene Draufsicht der Antriebsvorrichtung,
- Fig. 4: den Schnitt entlang der Schnittverlaufslinie IV-IV in Fig. 2,
- Fig. 5: den Schnitt entlang der Schnittverlaufslinie V-V in Fig. 2,
- Fig. 6: einen Schnitt ähnlich den Schnitten der Figuren 4 und 5, jedoch durch eine Befestigungsanordnung für den Elektrogetriebemotor,
- Fig. 7: die abgebrochene Ansicht des Zahnriemens entsprechend dem Blickrichtungspfeil VII in Fig. 3, in einer ersten Ausführungsform der Außenverzahnung des Zahnriemens,
- Fig. 8: eine weitere abgebrochene Ansicht des Zahnriemens in einer zweiten Ausführungsform der Außenverzahnung des Zahnriemens,
- Fig. 9: den abgebrochenen Schnitt durch den Zahnriemen entsprechend der Schnittverlaufslinie IX-IX in Fig. 8, jedoch mit einem mit dem Zahnriemen eingreifenden abgebrochen und teilweise geschnitten dargestellten Antriebskabel,
- Fig. 10: eine der Fig. 2 ähnliche Draufsicht, jedoch reduziert auf den Zahnriemen und die damit unmittelbar zusammenwirkenden Teile der Antriebsvorrichtung, mit Ausnahme der nicht dargestellten Antriebskabel, in einer gegenüber Fig. 2 anderen Ausführungsform der Umlenkrolle für den Zahnriemen,
- Fig. 11: eine der Fig. 10 ähnliche Draufsicht einer Ausführungsform, bei welcher die Umlenkung des Zahnriemens an einer gerundeten Gleitfläche erfolgt,
- Fig. 12: eine der Fig. 10 ähnliche Draufsicht, jedoch mit einer Spannvorrichtung für eine unverzahnte Umlenkrolle,
- Fig. 13: eine der Fig. 12 ähnliche Draufsicht, jedoch mit der Spannvorrichtung gemäß Fig. 12 in Verbindung mit einer verzahnten Umlenkrolle und
- Fig. 14: eine der Fig. 13 ähnliche Draufsicht, jedoch mit einer federbelasteten Spannvorrichtung.

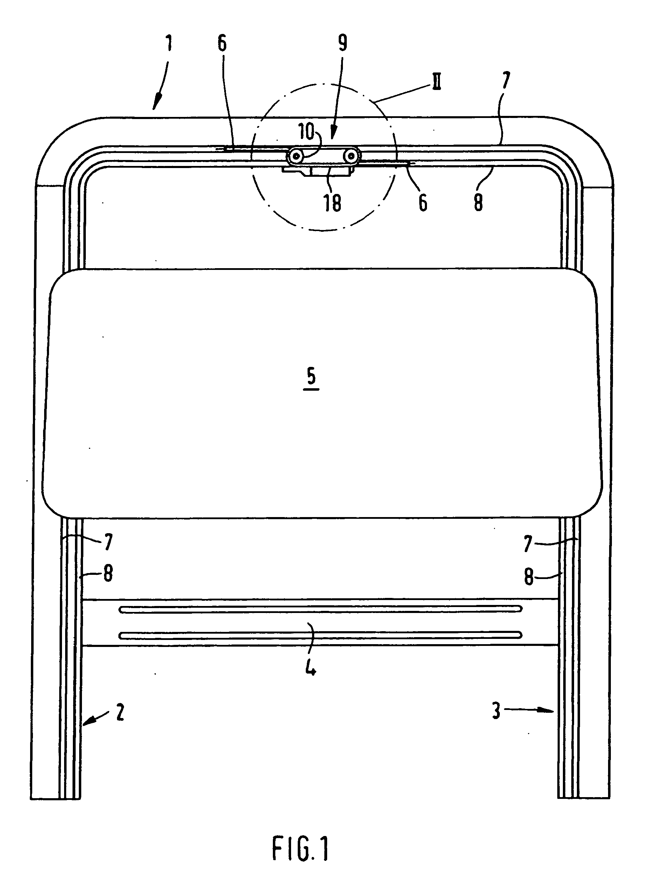

Der in Fig. 1 dargestellte Schiebedachrahmen, der in bekannter Weise modulartig vormontiert sein kann und zur Anbringung an einem mit einer Dachöffnung versehenen Kraftfahrzeugdach (nicht dargestellt) bestimmt ist, besteht im wesentlichen aus einem vorderen Rahmenquerteil 1, zwei seitlichen Rahmenteilen 2 und 3 und ggf. einem die seitlichen Rahmenteile 2, 3 gegeneinander aussteifenden mittleren Querprofil 4. An den beiden seitlichen Rahmenteilen 2, 3 befinden sich in der Regel Führungsschienen, an denen ein der Dachöffnung zugeordneter Deckel 5 verschiebbar geführt ist. Der Antrieb des Deckels 5 für Verschiebebewegungen und ggf. Schwenkbewegungen erfolgt über zwei in Führungskanälen und/oder -rohren drucksteif verschiebbar geführte Antriebskabel 6, von denen jeder Seite des Deckels 5 ein Kabel zugeordnet ist. Die Führungskanäle und/oder -rohre 7 und 8 sind in Fig. 1 ebenso wie die beiden Antriebskabel 6 nur angedeutet. Etwa in der Mitte des Rahmenquerteils 1 befindet sich die Antriebsvorrichtung 9, auf die sich die Erfindung bezieht und die nachfolgend näher beschrieben ist.

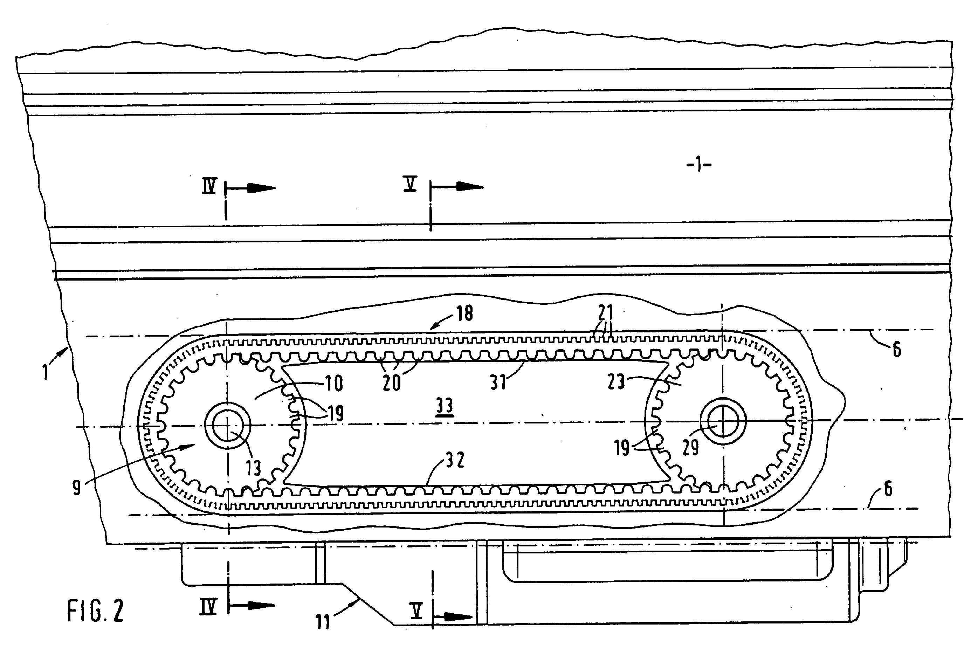

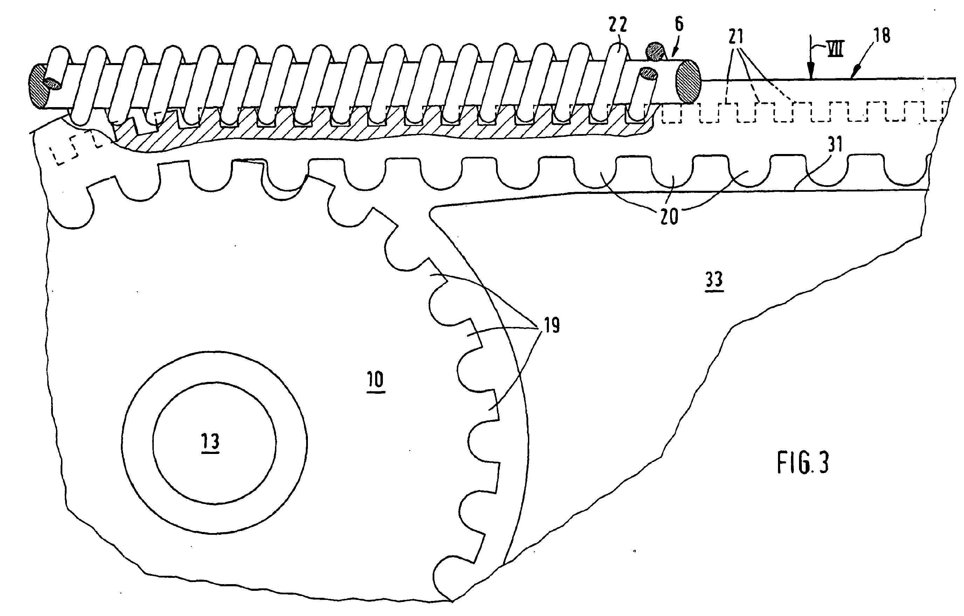

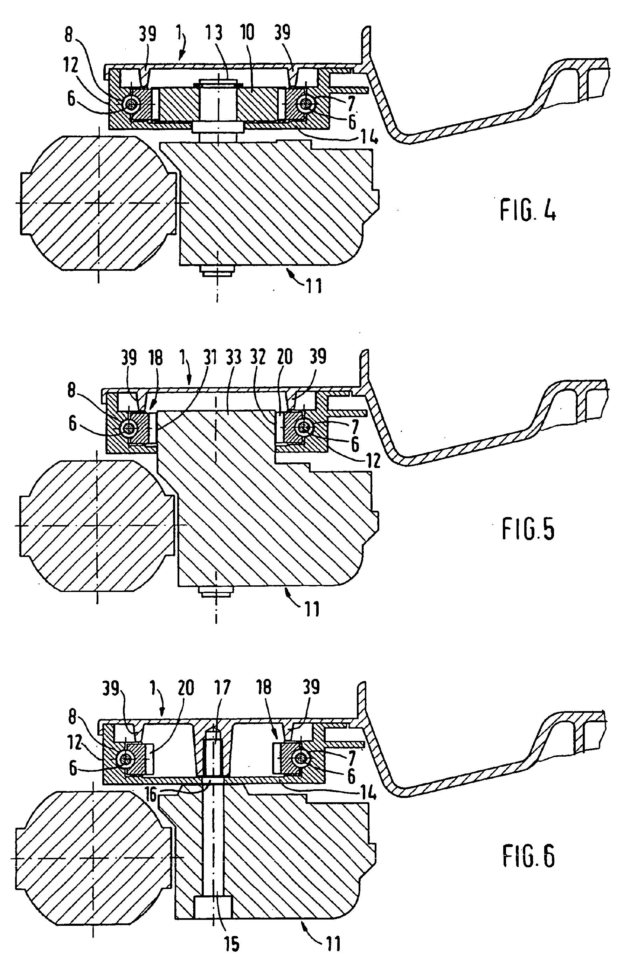

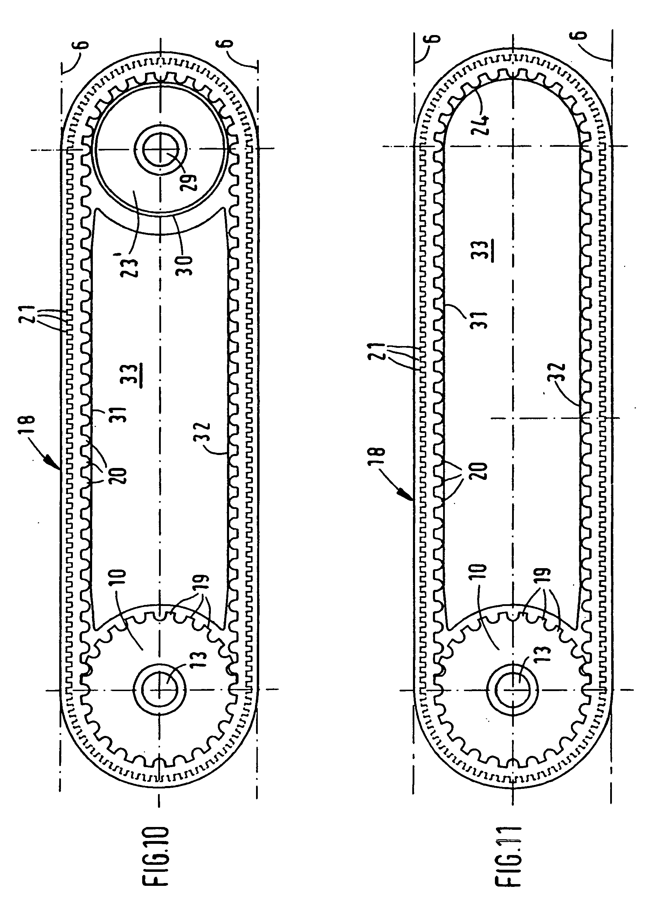

Hierzu wird zunächst auf die Figuren 2 und 3 in Verbindung mit den Schnittdarstellungen der Figuren 4 bis 6 Bezug genommen. Wie daraus hervorgeht, besitzt die Antriebsvorrichtung 9 ein Zahnritzel 10, das im gezeigten Beispiel von einem Elektrogetriebemotor 11 in beiden Drehrichtungen antreibbar ist. Das Antriebsritzel 10 befindet sich mittig zwischen den beiden Antriebskabeln 6, die gegenüberliegend in zueinander parallelen Führungskanälen 7, 8 drucksteif verschiebbar geführt sind. Mindestens im Bereich der Antriebsvorrichtung 9 sind die Antriebskabel 6 in einem Führungsprofil 12 (Figuren 4 bis 6) angeordnet, das in den Figuren 2 und 3 zur Zeichnungsvereinfachung nicht dargestellt ist. In Fig. 2 und auch in den Figuren 10 bis 14 sind die beiden Antriebskabel 6 nur mit ihren entsprechend bezeichneten Mittelachsen angegeben.

Das nach oben offene Führungsprofil 12 wird von dem vorderen Rahmenquerteil 1 geschlossen, wie die Figuren 4 bis 6 verdeutlichen. Der Elektrogetriebemotor 11, der mit seiner Antriebswelle 13 für das Zahnritzel 10 durch den unteren Steg 14 des Führungsprofils 12 hindurchgeführt ist (Fig. 4), das Führungsprofil 12 und das Rahmenquerteil 1 werden durch (nicht dargestellte) Schrauben fest miteinander verbunden, wie aus Fig. 6 am Beispiel einer der Befestigungsanordnungen hervorgeht. Zu diesem Zweck ist jeweils eine Aufnahmebohrung 15 für eine Schraube im Block des Elektrogetriebemotors 11 vorgesehen, die mit einer Durchgangsbohrung 16 im Steg 14 und einer Gewindebohrung 17 im Rahmenquerteil 1 fluchtet. Wird in diese Bohrungsanordnung 15, 16, 17 eine Schraube eingeführt und angezogen, wird das Führungsprofil 12 mit allen daran befindlichen Elementen zwischen dem Getriebemotor 11 und dem Rahmenquerteil fest eingespannt.

Zwischen dem Zahnritzel 10 und den beiden Antriebskabeln 6 ist ein endloser flexibler und zugfester Zahnriemen 18 angeordnet, der aus einem Kunststoffband mit oder ohne armierender Einlage geformt sein kann. Bei der armierenden Einlage kann es sich um einen biegewechselfesten Metallstreifen handeln, der mit einem geeigneten elastomeren Kunststoff umspritzt ist. Die Einlage verleiht dem Zahnriemen 18 zugleich die erforderliche Zugfestigkeit und Formbeständigkeit. An seiner Innenseite ist der Zahnriemen 18 mit einer der Verzahnung 19 des Zahnritzels 10 komplementären Innenverzahnung 20 versehen. An seiner Außenseite ist der Zahnriemen 18 mit einer Außenverzahnung 21 versehen, welche der bei derartigen Antriebskabeln 6 üblichen schraubenlinienförmigen Arbeitswicklung 22 aus einem Runddraht komplementär ist. Das Antriebskabel 6 mit seiner Arbeitswicklung 22 ist in Längenabschnitten in den Figuren 3 und 9 dargestellt.

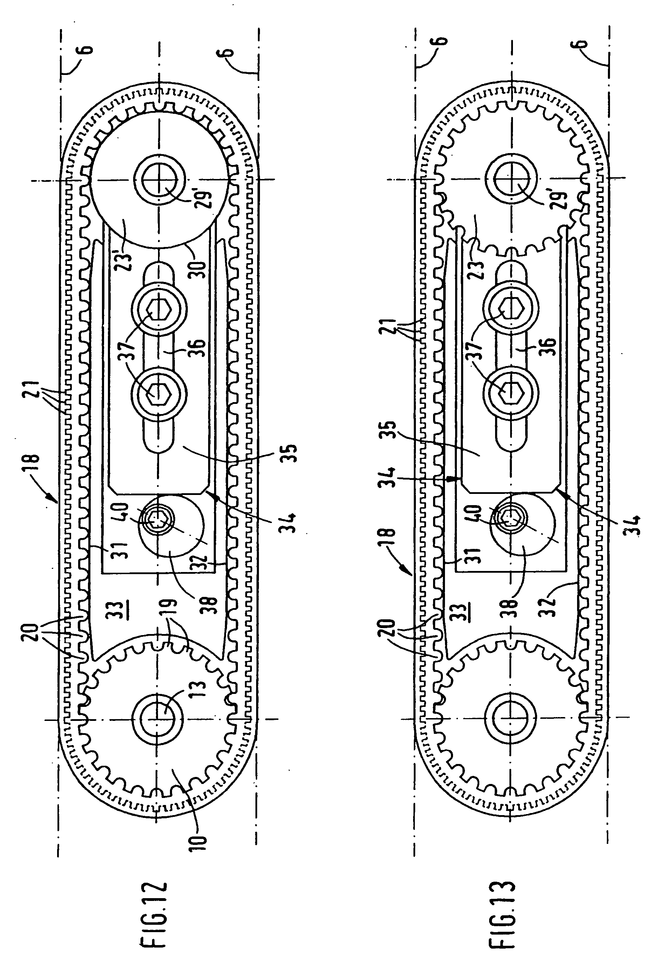

Der Zahnriemen 18 umschlingt das Zahnritzel 10 partiell, nämlich in allen gezeichneten Ausführungsbeispielen um einen Winkel von 180°, und ist außerdem mit einem entsprechenden Umschlingungswinkel um eine Umlenkrolle 23 (Fig. 2, 13, 14) bzw. 23' (Fig. 10, 12) oder eine gerundete Gleitfläche 24 (Fig. 11) herumgeführt. Der Zahnriemen 18 ist im Umschlingungsbereich am Zahnritzel 10 mit seiner Innenverzahnung 20 ständig mit der Verzahnung 19 des Zahnritzels 10 in Eingriff gehalten.

Das Zahnritzel 10 und die Umlenkrolle 23 oder 23' bzw. die Gleitfläche 24 sind voneinander beabstandet, so daß der Zahnriemen 18 gegenüberliegende geradlinige Streckenabschnitte parallel zu den Antriebskabeln 6 bildet. Die Außenverzahnung 21 des Zahnriemens 18 ist an diesen Streckenabschnitten ständig mit den Arbeitswicklungen 22 der Antriebskabel 6 in Eingriff gehalten. Aufgrund dieser Eingriffsverhältnisse der beteiligten Bauteile der Antriebsvorrichtung ist ersichtlich, daß ein Drehantrieb des Zahnritzels 10 je nach Drehrichtung den Zahnriemen 18 in der einen oder anderen Umlaufrichtung mitnimmt. Der Zahnriemen 18 wiederum nimmt die Antriebskabel 6 mit und verschiebt diese in den Führungskanälen 7, 8 in gegenläufigen Verschieberichtungen. Wird bei der Anordnung gemäß Fig. 2 beispielsweise das Zahnritzel im Uhrzeigersinn angetrieben, läuft der Zahnriemen 18 ebenfalls im Uhrzeigersinn über das Zahnritzel 10 und die Umlenkrolle 23. Dabei werden das mit Bezug auf Fig. 2 äußere Antriebskabel 6 nach rechts und das innere Antriebskabel 6 nach links verschoben.

Da das Zahnritzel 10 bei der erfindungsgemäßen Antriebsvorrichtung nicht mehr direkt mit den Arbeitswicklungen 22 der Antriebskabel 6 eingreift, ist für das Zahnritzel 10 keine Schrägverzahnung erforderlich. Die Verzahnung 19 des Zahnritzels 10 kann daher als Geradverzahnung ausgebildet sein. Dementsprechend ist dann auch die Innenverzahnung 20 des Zahnriemens 18 geradverzahnt.

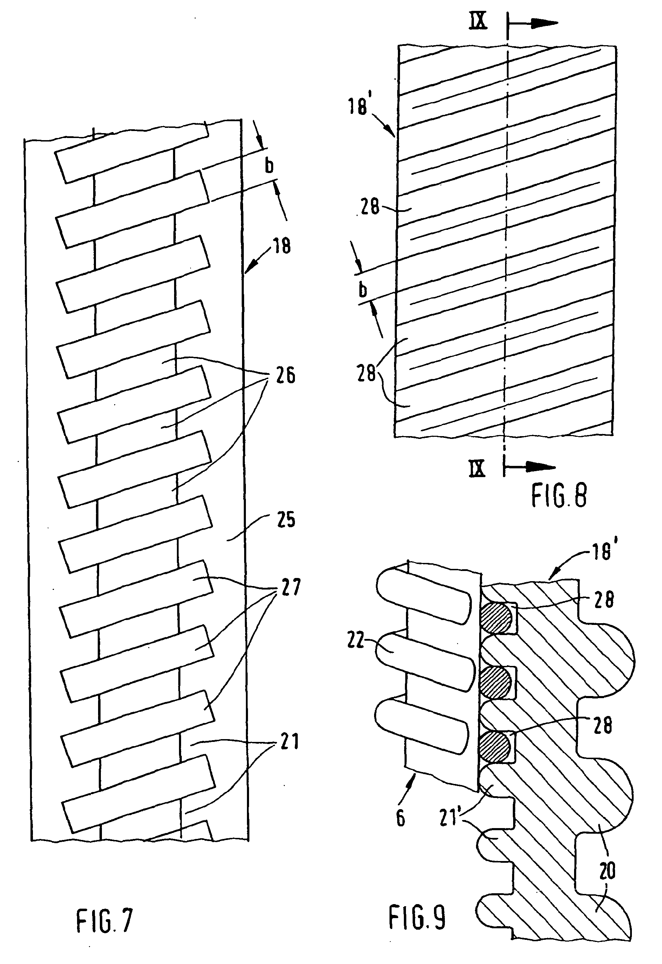

Die Außenverzahnung 21 des Zahnriemens 18 ist dagegen entsprechend der Schraubenliniensteigung der Arbeitswicklung 22 der Antriebskabel 6 schrägverzahnt, wie aus Fig. 7 hervorgeht. Aus Fig. 7 in Verbindung mit den Schnittdarstellungen der Figuren 4 bis 6 ist hinsichtlich der Verzahnungsgeometrie der Außenverzahnung 21 folgendes zu entnehmen.

Die Außenfläche 25 ist in den geradlinigen Streckenabschnitten des Zahnriemens 18 eine ebene Fläche, in welche alternierend Kernausnehmungen 26 und Zahnausnehmungen 27 unterschiedlicher Größe eingeformt sind. Die Kernausnehmungen 26 sind dem Kerndurchmesser der Antriebskabel 6 angepaßt, während die Zahnausnehmungen 27 dem Außendurchmesser der Arbeitswicklung 22 angepaßt sind. Die axialen Abstände der Zahnausnehmungen 27 sind durch die "Gewindesteigung" der Arbeitswicklung 22 definiert, während die Breite b (siehe Fig. 7) der Zahnausnehmungen 27 auf den Drahtdurchmesser der Arbeitswicklung 22 abgestimmt ist. Die Kernausnehmungen 26 und die Zahnausnehmungen 27 bilden gemeinsam die Außenverzahnung 21, die annähernd eine Negativausformung der Antriebskabel 6 ist. Die Zähne der Außenverzahnung 21 sind durch die konvexen schräggestellten Rippen gebildet, die sich zwischen jeweils zwei Zahnausnehmungen 27 befinden.

Bei der Ausführungsform gemäß den Figuren 8 und 9 sind in die Außenflächen des Zahnriemens 18' schräggestellte Nuten 28 geradlinig in gleichen Abständen eingeformt, die auf die "Gewindesteigung" der Arbeitswicklung 22 abgestimmt sind. Die Nutbreite b (siehe Fig. 8) ist auf den Drahtdurchmesser der Arbeitswicklung 22 abgestimmt, wie Fig. 9 verdeutlicht. Die zwischen den Nuten 28 gebildeten schräggestellten außen abgerundeten Rippen bilden die Außenverzahnung 21' des Zahnriemens 18'.

Bei den in den Figuren 2 und 13 gezeigten Ausführungsformen besitzt die Umlenkrolle 23 eine dem Zahnritzel 10 entsprechende Verzahnung 19, die mit der Innenverzahnung 20 des Zahnriemens 18 kämmt. Bei der Ausführungsform gemäß Fig. 2 ist diese Umlenkrolle 23 an einem am Block des Elektrogetriebemotors 11 angebrachten Zapfen 29 drehbar gelagert. Sie kann daher mit dem Zahnritzel 10 baugleich sein, was die Anzahl unterschiedlicher Teile der Antriebsvorrichtung verringert.

Die bei den Ausführungsformen gemäß den Figuren 10 und 12 dargestellte Umlenkrolle 23' ist dagegen an ihrer Außenfläche 30 zur Auflage der Innenverzahnung 20 des Zahnriemens 18 zylindrisch ausgebildet, wobei der Durchmesser der Umlenkrolle 23' etwa dem Fußkreisdurchmesser der Verzahnung 19 des Zahnritzels 10 entspricht. Bei der Ausführungsform gemäß Fig. 10 ist die Umlenkrolle 23' wiederum an einem am Block des Elektrogetriebemotors 11 angebrachten Zapfen 29 drehbar gelagert.

Bei der in Fig. 11 dargestellten Ausführungsform liegt der endlose Zahnriemen 18 (18') nach den für den Eingriff zwischen seiner Außenverzahnung 21 (21') und den Arbeitswicklungen 22 der Antriebskabel 6 vorgesehenen Streckenabschnitten der gerundeten Gleitfläche 24 auf, die sich im gezeichneten Beispiel über einen Winkel von 180° erstreckt und als halbe Zylinderoberfläche ausgebildet ist, deren Radius mit dem Fußkreisradius der Verzahnung 19 des Zahnritzels 10 etwa übereinstimmt.

Wie beispielsweise aus den Figuren 2 und 3 hervorgeht, ist der Zahnriemen 18 im Bereich der für den Eingriff seiner Außenverzahnung 21 mit den Arbeitswicklungen 22 der Antriebskabel 6 vorgesehenen Streckenabschnitte an gegenüberliegenden Stützflächen 31 und 32 mit seiner Innenverzahnung 20 gleitend geführt. Diese Stützflächen 31, 32 sorgen dafür, daß der Eingriff der Außenverzahnung 21 mit den Antriebskabeln 6, die sich ihrerseits in den Führungskanälen 7, 8 abstützen (Fig. 5), aufrechterhalten bleibt.

Die Gleitfläche 24 und die Stützflächen 31, 32 für den Zahnriemen 18 sind gemeinsam an einem zwischen den beiden Antriebskabeln 6 befestigten Stütz- und Führungselement 33 angeordnet, wie aus Fig. 11 hervorgeht. Dieses Stütz- und Führungselement 33 ist Bestandteil des Blocks des Elektrogetriebemotors 11 bzw. ist daran angebracht, wie Fig. 5 verdeutlicht. Auch der Zapfen 29, der die Umlenkrolle 23 bzw. 23' drehbar lagert, kann an dem Stütz- und Führungselement 33 angebracht sein.

Zur Erläuterung einer Spannvorrichtung, mit welcher die Spannung des Zahnriemens 18 einstellbar ist, wird nunmehr auf die Figuren 12 bis 14 Bezug genommen. Wie daraus hervorgeht, ist die Spannvorrichtung 34 auf die nachfolgend beschriebene Weise mit der drehbar gelagerten Umlenkrolle 23 bzw. 23' wirkverbunden. Selbstverständlich kann dabei anstelle einer Umlenkrolle 23, 23' auch eine gerundete Gleitfläche zur Anwendung gelangen, wie sie mit Bezug auf Fig. 11 unter Verwendung der Bezugszahl 24 beschrieben wurde.

Die Spannvorrichtung 34 besitzt einen parallel zu den Antriebskabeln 6 an dem Stütz- und Führungselement 33 verschiebbar geführten Spannschieber 35. An dem äußeren Ende des Spannschiebers 35 ist der Zapfen 29' für die drehbare Lagerung der Umlenkrolle 23 bzw. 23' angebracht. Für geführte Einstellverschiebbarkeit des Spannschiebers 35 sorgt ein durch den Spannschieber hindurchgeführter Stellschlitz 36, durch welchen Stell- und Befestigungsschrauben 37 hindurchgeführt sind, die in das Stütz- und Führungselement 33 einschraubbar sind. Es ist ersichtlich, daß nach Lösen der Stell- und Befestigungsschrauben der Spannschieber 35 gegenüber dem Stütz- und Führungselement 33 verschiebbar und einstellbar ist. Die eingestellte Position wird durch Anziehen der Stell- und Befestigungsschrauben 37 gesichert.

Bei der Ausführungsform gemäß Fig. 12 und 13 ist für die Einstellverschiebung des Spannschiebers 35 ein Stellexzenternocken 38 dreh- und feststellbar am Stütz- und Führungselement 33 angebracht, welcher dem Spannschieber 35 auf der der Umlenkrolle 23 bzw. 23' bzw. der Gleitfläche abgelegenen Seite anliegt. Die Spannung des Zahnriemens 18 erfolgt nach dem Lösen einer Feststellschraube 40 durch Drehen des Stellexzenternockens 38 um die Achse der Feststellschraube 40. Nach dem Spannvorgang wird die Feststellschraube angezogen.

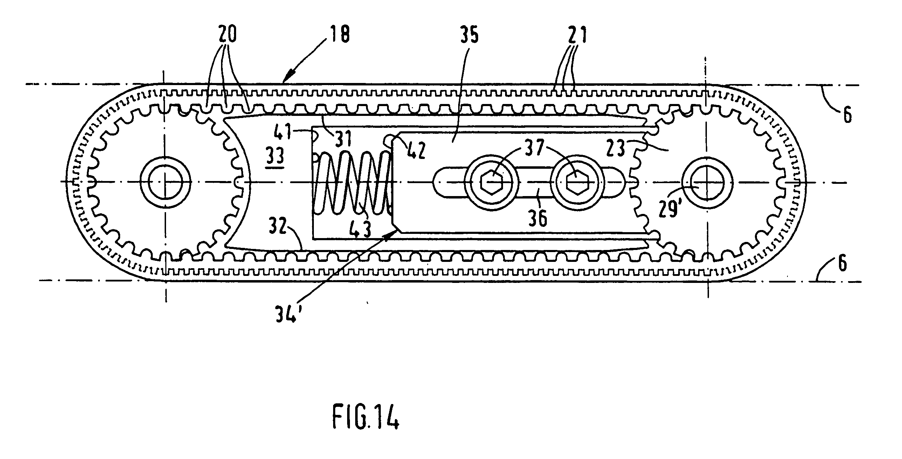

Bei der in Fig. 14 gezeigten Ausführungsform befindet sich zwischen zwei zueinandergekehrten Abstützflächen 41, 42 am Stütz- und Führungselement 33 bzw. am Spannschieber 35 eine vorgespannte Druckfeder 43. Bei gelösten Schrauben 37 beaufschlagt die Druckfeder 43 den Spannschieber 35 mit ihrer Federkraft und spannt den Zahnriemen 18. Durch Anziehen der Schrauben 37 wird die durch Federkraft vorgenommene Einstellung fixiert. Wenn der Spannschieber 35 nicht durch Schrauben 37 fixiert, sondern nur verschiebbar geführt ist, bleibt die Riemenspannung stets konstant.

Wie aus den Figuren 4 bis 6 hervorgeht, sind an dem Rahmenquerteil 1 nach unten weisende Führungsvorsprünge 39 angebracht, welche den Zahnriemen 18 bei seiner Umlaufbewegung führen und dabei verhindern, daß der Zahnriemen 18 unter den Betriebsbedingungen nach oben ausweichen kann. Ein Ausweichen des Zahnriemens 18 nach unten wird durch den Steg 14 des Führungsprofils 12 verhindert.

Es wird eine geräuscharme, auch hohen Antriebskräften standhaltende und eine gleichförmige, d.h. ruckfreie Verschiebung des Deckels von Kraftfahrzeugschiebedächern ermöglichende Antriebsvorrichtung vorgeschlagen. Die Antriebsvorrichtung umfaßt einen Zahnriemen, der so geführt ist, daß sich zwei parallele Streckenabschnitte am Zahnriemen ausbilden. An diesen Streckenabschnitten steht der Zahnriemen mit einer über seinen Umfang unterbrechungslos umlaufenden Außenverzahnung mit den beiden Antriebskabeln für den Deckel im Zahneingriff. Eine unterbrechungslos über seinen Innenumfang umlaufende Innenverzahnung steht mit einem drehend in beide Drehrichtungen antreibbaren Zahnritzel, welches partiell von dem Zahnriemen umschlungen wird, im Zahneingriff.

### Bezugszeichenliste

- 1: Rahmenquerteil
- 2: Seitliches Rahmenteil
- 3: Seitliches Rahmenteil
- 4: Querprofil
- 5: Deckel
- 6: Antriebskabel
- 7: Führungskanal und/oder -rohr
- 8: Führungskanal und/oder -rohr
- 9: Antriebsvorrichtung
- 10: Zahnritzel
- 11: Elektrogetriebemotor
- 12: Führungsprofil
- 13: Antriebswelle
- 14: Steg
- 15: Aufnahmebohrung
- 16: Durchgangsbohrung
- 17: Gewindebohrung
- 18: Zahnriemen
- 18': Zahnriemen
- 19: Verzahnung
- 20: Innenverzahnung
- 21: Außenverzahnung
- 21': Außenverzahnung
- 22: Arbeitswicklung
- 23: Umlenkrolle
- 23': Umlenkrolle
- 24: Gleitfläche
- 25: Außenfläche
- 26: Kernausnehmungen
- 27: Zahnausnehmungen
- 28: Nuten
- 29: Zapfen
- 29': Zapfen
- 30: Außenfläche
- 31: Stützfläche
- 32: Stützfläche
- 33: Stütz- und Führungselement
- 34: Spannvorrichtung
- 34': Spannvorrichtung
- 35: Spannschieber
- 36: Stellschlitz
- 37: Stell- und Befestigungsschrauben
- 38: Stellexzenternocken
- 39: Führungsvorsprünge
- 40: Feststellschraube
- 41: Abstützfläche
- 42: Abstützfläche
- 43: Druckfeder

## Patentansprüche

1. Antriebsvorrichtung für Kraftfahrzeugschiebedächer, mit einem Zahnritzel (10), das in beiden Drehrichtungen antreibbar ist, und zwei flexiblen jeweils mit einer schraubenlinienförmigen Draht-Arbeitswicklung (22) versehenen Antriebskabeln (6), die gegenüberliegend in zueinander parallelen Führungskanälen (7) drucksteif verschiebbar geführt sind, wobei das Zahnritzel (10) zur Umsetzung seiner Drehbewegungen in gegenläufige Verschiebebewegungen der beiden Antriebskabel (6) zwischen diesen angeordnet ist, **dadurch gekennzeichnet, daß** zwischen dem Zahnritzel (10) und den beiden Antriebskabeln (6) ein endloser, flexibler und zugfester Zahnriemen (18, 18') angeordnet ist, welcher an seiner Innenseite mit einer der Verzahnung (19) des Zahnritzels (10) komplementären Innenverzahnung (20) und an seiner Außenseite mit einer den schraubenlinienförmigen Arbeitswicklungen (22) der Antriebskabel (6) komplementären Außenverzahnung (21, 21') versehen ist, daß der Zahnriemen (18, 18') das Zahnritzel (10) partiell umschlingt und seine Innenverzahnung (20) im Umschlingungsbereich ständig mit der Verzahnung (19) des Zahnritzels (10) kraftschlüssig in Eingriff gehalten ist und daß der Zahnriemen (18, 18') an gegenüberliegenden Streckenabschnitten parallel zu den Antriebskabeln (6) geführt und seine Außenverzahnung (21, 21') an diesen Streckenabschnitten ständig mit den Arbeitswicklungen (22) der Antriebskabel (6) kraftschlüssig in Eingriff gehalten ist.

2. Antriebsvorrichtung nach Anspruch 1, **dadurch gekennzeichnet, daß** die Innenverzahnung (20) des Zahnriemens (18) und das Zahnritzel (10) geradverzahnt sind, während die Außenverzahnung (21, 21') des Zahnriemens (18, 18') entsprechend der Schraubenliniensteigung der Draht-Arbeitswicklung (22) der Antriebskabel (6) schrägverzahnt ist.

3. Antriebsvorrichtung nach Anspruch 1 oder 2, **dadurch gekennzeichnet, daß** der endlose Zahnriemen (18, 18') nach den für den Eingriff zwischen seiner Außenverzahnung (21, 21') und den Arbeitswicklungen (22) der Antriebskabel (6) vorgesehenen Streckenabschnitten an einer drehbar gelagerten Umlenkrolle (23, 23') umgelenkt ist.

4. Antriebsvorrichtung nach Anspruch 3, **dadurch gekennzeichnet, daß** die Umlenkrolle (23) eine dem Zahnritzel (10) entsprechende Verzahnung (19) besitzt.

5. Antriebsvorrichtung nach Anspruch 1 oder 2, **dadurch gekennzeichnet, daß** der endlose Zahnriemen (18, 18') nach den für den Eingriff zwischen seiner Außenverzahnung (21, 21') und den Arbeitswicklungen (22) der Antriebskabel (6) vorgesehenen Streckenabschnitten an einer gerundeten Gleitfläche (24) umgelenkt ist.

6. Antriebsvorrichtung nach einem der vorstehenden Ansprüche 1 bis 5, **dadurch gekennzeichnet, daß** der Zahnriemen (18, 18') im Bereich der für den Eingriff seiner Außenverzahnung (21, 21') mit den Arbeitswicklungen (22) der Antriebskabel (6) vorgesehenen Streckenabschnitte an Stützflächen (31, 32) gleitend geführt ist.

7. Antriebsvorrichtung nach den Ansprüchen 3 bis 6, **dadurch gekennzeichnet, daß** die drehbar gelagerte Umlenkrolle (23, 23') bzw. die Gleitfläche (24) und die Stützflächen (31, 32) für den Zahnriemen (18, 18') gemeinsam an einem zwischen den beiden Antriebskabeln (6) befestigten Stütz- und Führungselement (33) angeordnet sind.

8. Antriebsvorrichtung nach Anspruch 7, **dadurch gekennzeichnet, daß** das Stütz- und Führungselement (33) bei Elektromotorantrieb Bestandteil des Elektrogetriebemotors (11) ist.

9. Antriebsvorrichtung nach einem der Ansprüche 1 bis 8, **dadurch gekennzeichnet, daß** die Spannung des Zahnriemens (18, 18') mittels einer Spannvorrichtung (34) einstellbar ist.

10. Antriebsvorrichtung nach einem der Ansprüche 1 bis 8, **dadurch gekennzeichnet, daß** die Spannung des Zahnriemens (18, 18') durch eine federbelastete Spannvorrichtung (34') erzeugt ist.

11. Antriebsvorrichtung nach einem der Ansprüche 9 und 10, **dadurch gekennzeichnet, daß** die Spannvorrichtung (34, 34') mit der drehbar gelagerten Umlenkrolle (23, 23') bzw. der gerundeten Gleitfläche (24) wirkverbunden ist.

12. Antriebsvorrichtung nach den Ansprüchen 9 bis 11, **dadurch gekennzeichnet, daß** die Spannvorrichtung (34) einen parallel zu den Antriebskabeln (6) an dem Stütz- und Führungselement (33) verschiebbar geführten Spannschieber (35) besitzt, an welchem die Umlenkrolle (23, 23') gelagert bzw. die gerundete Gleitfläche (24) befestigt ist.

13. Antriebsvorrichtung nach Anspruch 12, **dadurch gekennzeichnet, daß** dem Spannschieber 35 ein dreh- und feststellbar am Stütz- und Führungselement (33) angebrachter Stellexzenternocken (38) auf der der Umlenkrolle (23, 23') bzw. der Gleitfläche (24) abgelegenen Seite des Spannschiebers (35) anliegt.

14. Antriebsvorrichtung nach Anspruch 12, **dadurch gekennzeichnet, daß** zwischen dem Stütz- und Führungselement (33) und dem Spannschieber (35) eine Druckfeder (40) mit Vorspannung angeordnet ist.

## Claims

1. Driving device for motor vehicle sliding roofs, having a toothed pinion (10), which can be driven in both directions of rotation, and two flexible drive cables (6) each provided with a helical wire working winding (22), which are displaceably guided opposite one another in parallel guide channels (7) where they are rigid in compression, the toothed pinion (10) being arranged between the two drive cables (6) for converting its rotational movements into opposing displacement movements of these, **characterized in that** an endless, flexible and tension-proof toothed belt (18, 18') is arranged between the toothed pinion (10) and the two drive cables (6), which belt on its inner side is provided with an internal toothing (20) complementary to the toothing (19) of the toothed pinion (10) and on its outer side is provided with an external toothing (21, 21') complementary to the helical working winding (22) of the drive cables (6), that the toothed belt (18, 18') partially wraps the toothed pinion (10) and its internal toothing (20) is held in permanent force-locking engagement with the toothing (19) of the toothed pinion (10), and that the toothed belt (18, 18') on opposing line sections is guided parallel to the drive cables (6) and its external toothing (21, 21') on these line sections is held in permanent force-locking engagement with the working windings (22) of the drive cables (6).

2. Driving device according to claim 1, **characterized in that** the internal toothing (20) of the toothed belt (18) and the toothed pinion (10) are straight-toothed, whilst the external toothing (21, 21') of the toothed belt (18, 18') is helically toothed corresponding to the helical lead of the wire working winding (22) of the drive cables (6).

3. Driving device according to claim 1 or 2, **characterized in that** after the line sections provided for the engagement between its external toothing (21, 21') and the working windings (22) of the drive cables (6) the endless toothed belt (18, 18') is reversed on a pivoted return sheave (23, 23').

4. Driving device according to claim 3, **characterized in that** the return sheave (23) has a toothing (19) corresponding to the toothed pinion (10).

5. Driving device according to claim 1 or 2, **characterized in that** after the line sections provided for the engagement between its external toothing (21, 21') and the working windings (22) of the drive cables (6) the endless toothed belt (18, 18') is reversed on a rounded slide surface (24).

6. Driving device according to one of the preceding claims, **characterized in that** the toothed belt (18, 18') in the area of the line sections provided for the engagement between its external toothing (21, 21') and the working windings (22) of the drive cables (6) is slidable guided on support surfaces (31, 32).

7. Driving device according to claims 3 to 6, **characterized in that** the pivoted return sheave (23, 23') or the slide surface (24) and the support surfaces (31, 32) for the toothed belt (18, 18') are arranged together on a support and guide element (33) fixed between the two drive cables (6).

8. Driving device according to claim 7, **characterized in that** in the case of an electric motor drive the support and guide element (33) is an integral part of the electric geared motor (11).

9. Driving device according to one of the claims 1 to 8, **characterized in that** the tension of the toothed belt (18, 18') is adjustable by means of a tensioning device (34).

10. Driving device according to one of the claims 1 to 8, **characterized in that** the tension of the toothed belt (18, 18') is produced by a spring-loaded tensioning device (34').

11. Driving device according to one of the claims 9 and 10, **characterized in that** the tensioning device (34, 34') is operatively connected to the pivoted return sheave (23, 23') or the rounded slide surface (24).

12. Driving device according to claims 9 to 11, **characterized in that** the tensioning device (34) has a tensioning slide (35) slidable guided on the support and guide element (33) parallel to the drive cables (6), on which slide the return sheave (23, 23') is pivoted or the rounded slide surface (24) is fixed.

13. Driving device according to claim 12,**characterized in that** a rotatable and lockable adjusting eccentric cam (38), fitted to the support and guide element (33), bears on the tensioning slide (35) on that side of the tensioning slide (35) remote from the return sheave (23, 23') or the slide surface (24).

14. Driving device according to claim 12, **characterized in that** a biased compression spring (40) is arranged between the support and guide element (33) and the tensioning slide (35).

## Revendications

1. Dispositif d'entraînement pour toits ouvrants de véhicules automobiles, comportant un pignon (10) qui peut être entraîné dans les deux directions, et deux câbles d'entraînement (6) flexibles pourvus chacun d'un enroulement de travail en fil (22) de forme hélicoïdale, qui sont guidés à déplacement de manière raide à la compression en étant opposés l'un à l'autre dans des canaux de guidage (7) parallèles l'un à l'autre, le pignon (10) étant agencé entre les deux câbles d'entraînement (6) pour convertir ses mouvements de rotation en mouvements de déplacement en sens contraires de ceux-ci, **caractérisé en ce que** entre le pignon (10) et les deux câbles d'entraînement (6) est agencée une courroie dentée (18, 18') sans fin, flexible et résistante à la traction, laquelle est pourvue, sur sa face intérieure, d'une denture intérieure (20) complémentaire de la denture (19) du pignon (10) et sur sa face extérieure, d'une denture extérieure (21, 21') complémentaire des enroulements de travail (22) de forme hélicoïdale des câbles d'entraînement (6), **en ce que** la courroie dentée (18, 18') enlace partiellement le pignon (10) et dans la zone d'enlacement, sa denture intérieure (20) est maintenue en prise constante avec la denture (19) du pignon (10) par coopération de forces, et **en ce que** la courroie dentée (18, 18') est guidée sur des tronçons de trajets opposés parallèlement aux câbles d'entraînement (6) et dans ces tronçons de trajet, sa denture extérieure (21, 21') est maintenue en prise constante avec les enroulements de travail (22) du câble d'entraînement (6) par coopération de forces.

2. Dispositif d'entraînement selon la revendication 1, **caractérisé en ce que** la denture intérieure (20) de la courroie (18) et le pignon (10) sont à denture droite tandis que la denture extérieure (21, 21') de la courroie dentée (18, 18') est à denture hélicoïdale de manière correspondante à la pente de la pente hélicoïdale de l'enroulement de travail en fil (22) du câble d'entraînement (6).

3. Dispositif d'entraînement selon la revendication 1 ou 2, **caractérisé en ce que** la courroie dentée (18, 18') sans fin est déviée sur une poulie de renvoi (23, 23') montée rotative après les tronçons de trajet prévus pour l'engagement entre sa denture extérieure (21, 21') et les enroulements de travail (22) des câbles d'entraînement (6).

4. Dispositif d'entraînement selon la revendication 3, **caractérisé en ce que** la poulie de renvoi (23) possède une denture (19) correspondante au pignon (10).

5. Dispositif d'entraînement selon la revendication 1 ou 2, **caractérisé en ce que** la courroie dentée (18, 18') sans fin est déviée sur une surface de coulissement arrondie (24) après les tronçons de trajet prévus pour l'engagement entre sa denture extérieure (21, 21') et les enroulements de travail (22) des câbles d'entraînement (6).

6. Dispositif d'entraînement selon l'une des revendications précédentes 1 à 5, **caractérisé en ce que** la courroie dentée (18, 18') est guidée à coulissement sur des surfaces de soutien (31, 32) dans la région des tronçons de trajet prévus pour l'engagement de sa denture extérieure (21, 21') avec les enroulements de travail (22) des câbles d'entraînement (6).

7. Dispositif d'entraînement selon l'une des revendications 3 à 6, **caractérisé en ce que** la poulie de renvoi (23, 23') montée rotative ou la surface de coulissement (24) et les surfaces de soutien (31, 32) pour la courroie dentée (18, 18') sont agencées en commun sur un élément de soutien et de guidage (33) fixé entre les deux câbles d'entraînement (6).

8. Dispositif d'entraînement selon la revendication 7, **caractérisé en ce que** dans le cas d'un entraînement par moteur électrique, l'élément de soutien et de guidage (33) fait partie du moteur de transmission électrique (11).

9. Dispositif d'entraînement selon l'une des revendications 1 à 8, **caractérisé en ce que** la tension de la courroie d'entraînement (18, 18') est réglable au moyen d'un dispositif de serrage (34).

10. Dispositif d'entraînement selon l'une des revendications 1 à 8, **caractérisé en ce que** la tension de la courroie d'entraînement (18, 18') est produite par un dispositif de serrage (34') sollicité par ressort.

11. Dispositif d'entraînement selon l'une des revendications 9 à 10, **caractérisé en ce que** le dispositif de serrage (34, 34') est relié activement à la poulie de renvoi (23, 23') montée rotative ou avec la surface de coulissement (24) arrondie.

12. Dispositif d'entraînement selon l'une des revendications 9 à 11, **caractérisé en ce que** le dispositif de tension (34) possède un coulisseau tendeur (35) guidé en déplacement parallèlement aux câbles d'entraînement (6) sur l'élément de soutien et de guidage (33), coulisseau sur lequel la poulie de déviation (23, 23') est montée ou la surface de coulissement (24) arrondie est fixée.

13. Dispositif d'entraînement selon la revendication 12, **caractérisé en ce qu'**une came excentrique de réglage (38) montée de manière à pouvoir tourner et à être fixée sur l'élément de soutien et de guidage (33) est en appui sur la face du coulisseau tendeur (35) qui est éloignée de la poulie de renvoi (23, 23') ou de la surface de coulissement (24).

14. Dispositif d'entraînement selon la revendication 12, **caractérisé en ce qu'**un ressort de compression (40) est agencé sous précontrainte entre l'élément de soutien et de guidage (33) et le coulisseau tendeur (35).
